# EUROPEAN PATENT SPECIFICATION

(11) **EP 0 869 686 B1**
(45) Date of publication and mention of the grant of the patent: **02.05.2002**
(21) Application number: 98302508.1
(22) Date of filing: 31.03.1998
(51) Int. Cl.: H04N 17/00, H04N 1/00

(54) **Picture quality assessment using spatially variable assessment threshold values**
Bildqualitätsbewertung mit räumlich variablen Beurteilungsschwellwerten
Evaluation de la qualité d'une image utilisant des valeurs de seuil de jugement spatialement variables

(30) Priority: 04.04.1997 US 826648
(43) Date of publication of application: 07.10.1998
(73) Proprietor: TEKTRONIX, INC., Wilsonville, Oregon 97070-1000 (US)
(72) Inventor: Edwards, John W., Lake Oswego, Oregon 97035 (US)
(74) Representative: Molyneaux, Martyn William

(56) References cited:
- WO-A-95/31869
- US-A- 5 214 508
- US-A- 5 446 492
- WOLF S ET AL: "OBJECTIVE QUALITY ASSESSMENT OF DIGITALLY TRANSMITTED VIDEO" PROCEEDINGS OF THE PACIFIC RIM CONFERENCE ON COMMUNICATIONS, COMPUT AND SIGNAL PROCESSING, VICTORIA, CA, MAY 9 - 10, 1991, vol. 2, 9 May 1991, pages 477-482, XP000280344 INSTITUTE OF ELECTRICAL AND ELECTRONICS ENGINEERS

## Description

### BACKGROUND OF THE INVENTION

The present invention relates to the test and measurement of video image signals, and more particularly to video picture quality assessment using spatial location.

Both subjective and objective measurements of video quality degradation in video image signals have been done. In subjective measurements human subjects visually compare and rate the degradation between an original and an impaired video image signal. Objective quality measurements are done by comparing an impaired video image signal to its original video image signal. The comparison includes such processing as transforming video image signals into bit-map form, adjusting mutual amplitude gain, offset and spatial shift, filtering them in some fashion, subtracting them from each other, then filtering some more and representing the results either as error maps or as statistics derived from these maps.

Subjective measurement methods suffer from a lack of reproducibility and consistency. Objective methods are mechanistic and lack the ability to differentiate between areas where human observers pay attention ("attentional factors") and those areas without much interest to humans.

Copending U.S. Patent Application Serial No. 896912, filed 18.07.1997 by Bozidar Janko and John Edwards entitled "Attentional Maps in Objective Measurement of Video Quality Degradation" (published under US-A-5 940 124 and corresponding EP-A- 0 892 564), addresses content-based picture quality by describing a method of isolating a particular content element, such as a human face, and applying a greater quality weighting to such element. However this method requires either a manual input as to which elements in the picture should be weighted more or a special processing algorithm that makes such a determination for every picture.

It is well known that certain portions of a video picture are more likely to carry important information than others. The video industry uses a so-called "safe picture" and "safe title" area inside which the important elements of a program are generally captured by a camera and in which titles are contained. Essentially the safe areas define the central portion of the screen, i.e., the periphery of the video image is outside the safe area.

What is desired is a simpler method of picture quality assessment using spatial location rather than attentional maps.

### BRIEF SUMMARY OF THE INVENTION

Accordingly the present inventions provides picture quality assessment using spatial location

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is a block diagram view of a test and measurement instrument for performing picture quality assessment according to the present invention.

Fig. 2 is a segment weighting map for picture quality assessment according to the present invention.

Fig. 3 is a diagram of measured quality errors for each segment of the segment weighting map of Fig. 2.

Fig. 4 is an error display using the segment weighting map of Fig. 2 for the measured quality errors of Fig. 3.

### DETAILED DESCRIPTION OF THE INVENTION

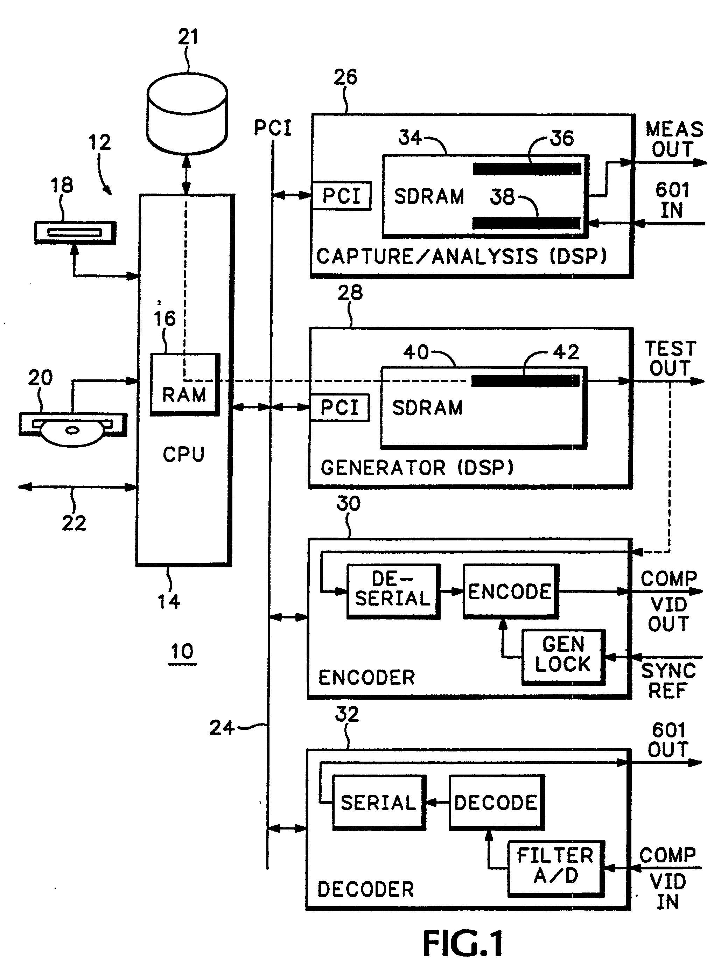

Referring now to Fig. 1 a test and measurement instrument 10 is shown based upon a personal computer interface (PCI) architecture. A personal computer (PC) 12 has a central processing unit (CPU) 14 that includes a random access memory 16. The PC 12 typically includes a floppy disc drive 18, a CD-ROM drive 20, a hard disc drive 21 and an interface port 22 to which, for example, a mouse, a keyboard, a printer and the like may be coupled. The PC 12 is coupled to a PCI bus 24 to which other PCI compatible plug-in cards may be coupled. For the present instrument 10 a digital signal processing (DSP) board may be plugged into the PCI bus 24, which board includes a capture/analysis section 26 and an optional generator section 28. Also coupled to the PCI bus 24 may be an encoder 30 for converting serial digital video to composite video and/or a decoder 32 for converting composite video to serial digital video.

The DSP board includes in the capture/analysis section 26 a random access memory (SDRAM) 34 that contains a test sequence file 36 and a capture sequence file 38. The generator section 28 also includes an SDRAM 40 that contains a generated test sequence file 42. In operation a test sequence may either be captured from a source and stored in the test sequence file 36 or may be generated from the generated test sequence file 42. A video image sequence corresponding to the video test sequence that is received from a system under test to which the video test sequence is input is captured and stored in the capture sequence file. The DSP then compares the test and capture files according to the desired measurement, such as just noticable difference (JND) or power signal to noise ratio (PSNR) measurements. The resulting measurements are provided as an output for display.

The generated video test sequence may be input to the encoder 30 to produce a composite video signal for display on an appropriate monitor.

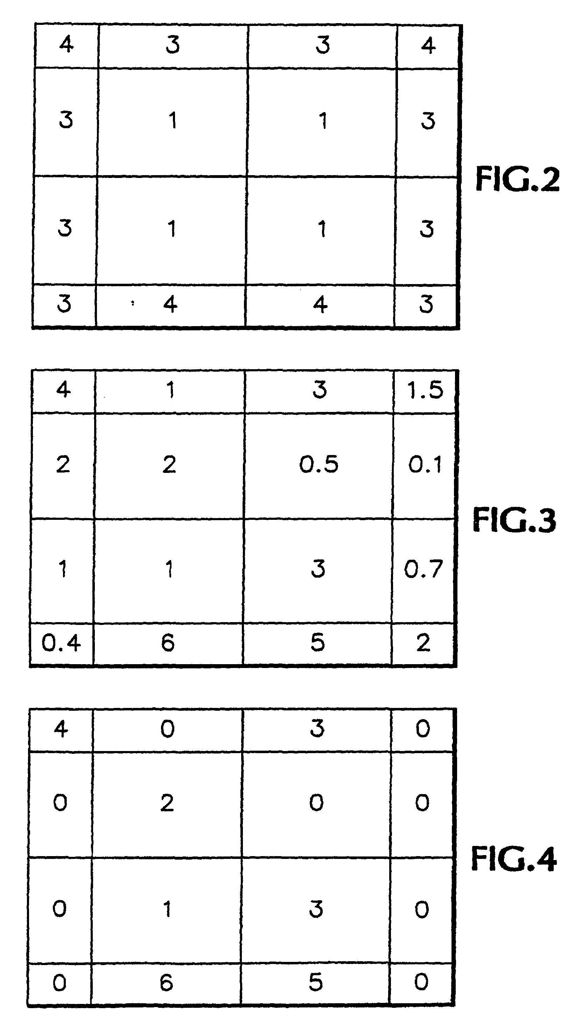

As shown in Fig. 2 each video image may be broken up into a plurality of geometric segments. For convenience rectangular segments are shown. The segments form a matrix of rectangles with arbitrary horizontal and vertical dimensions. A picture quality metric is computed for each segment using an appropriate measure, such JND or PSNR. A quality metric threshold is assigned for each segment, so that for example the center segments receive a low error threshold value, such as 1, while those around the periphery receive greater error threshold values, to form a segment weighting map. The error values generated by the comparison of the test sequence file with the capture sequence file are compared with the corresponding threshold values defined by the segment weighting map. As an example some segment error values are shown in Fig. 3. Where the error value is less than the threshold in the segment weighting map, the resulting section in an error display is shown as having zero errors, as shown in Fig. 4. If the error value is equal to or greater than the threshold, then the error value is provided on the display for each segment.

Although rectangular segments are described for ease of explanation, any arbitrarily sized, geometric picture segment may be used and arbitrarily located on the image. The threshold weighting described above is applied to such segments.

Thus the present invention provides picture quality assessment by dividing the video picture into arbitrary geometric segments, finding the quality error for each segment, and comparing the error with a segment weighting map where specified segments have a low threshold value and the other segments have a higher threshold value to produce an error display.

## Claims

1. A method of assessing video picture quality comprising the steps of:
dividing a video picture into a plurality of geometric segments;
generating a segment weighting map having a specified quality metric threshold for each segment;
comparing the video picture with a corresponding test video picture to produce for each segment a quality error value; and
displaying the quality error value for each segment where the quality error value equals or exceeds the specified quality metric threshold from the segment weighting map.

## Patentansprüche

1. Verfahren zum Beurteilen der Videobildqualität mit den folgenden Schritten:
Unterteilen eines Videobildes in eine Vielzahl von geometrischen Segmenten;
Erzeugen eines Segmentgewichtungsplans mit einer festgelegten qualitätsmetrischen Schwelle für jedes Segment;
Vergleichen des Videobildes mit einem entsprechenden Testvideobild, um für jedes Segment einen Qualitätsfehlerwert zu erzeugen; und
Anzeigen des Qualitätsfehlerwerts für jedes Segment, in dem der Qualitätsfehlerwert der festgelegten qualitätsmetrischen Schwelle aus dem Segmentgewichtungsplan gleich ist oder diese überschreitet.

## Revendications

1. Procédé de contrôle de la qualité d'une image vidéo, comprenant les étapes consistant à :
diviser une image vidéo en une pluralité de segments géométriques ;
créer une carte de pondération de segments présentant un seuil métrique prédéterminé de qualité pour chaque segment ;
comparer l'image vidéo à une image vidéo de test correspondante pour produire une valeur d'erreur de qualité pour chaque segment ; et
afficher la valeur d'erreur de qualité pour chaque segment pour lequel la valeur d'erreur de qualité égale ou dépasse le seuil métrique prédéterminé de qualité provenant de la carte de pondération de segments.
